# EUROPEAN PATENT APPLICATION

(11) **EP 4 332 344 A1**
(43) Date of publication of application: **06.03.2024**
(21) Application number: 22795511.9
(22) Date of filing: 31.03.2022
(51) Int. Cl.: E21B 17/00, E21B 17/042, F16L 15/04

(54) **OIL-WELL STEEL PIPE**

(30) Priority: 28.04.2021 JP 2021075844
(71) Applicant: NIPPON STEEL CORPORATION, Chiyoda-ku Tokyo 100-8071 (JP); Vallourec Oil and Gas France, 59620 Aulnoye-Aymeries (FR)
(72) Inventor: OSHIMA, Masahiro, Tokyo 100-8071 (JP); KIMOTO, Masanari, Tokyo 100-0006 (JP)
(74) Representative: J A Kemp LLP
(86) International application number: PCT/JP2022/016384
(87) International publication number: WO 2022/230595

(57) **Abstract**

An oil-well steel pipe including a Zn-Ni alloy plating layer that has excellent galling resistance is provided. An oil-well steel pipe according to the present disclosure includes: a pipe main body that includes a pin which includes a pin contact surface, and a box which includes a box contact surface; and a Zn-Ni alloy plating layer which is formed on at least one of the pin contact surface and the box contact surface. The chemical composition of the pipe main body contains, in mass%, C: 0.01 to 0.60%, Cr: 0 to 8.0% and Fe: 80.0% or more. In addition, when a region containing C in an amount that, in mass%, is 1.5 times or more greater than the C content of the pipe main body is defined as a C-concentrated layer, the thickness of the C-concentrated layer in the wall thickness direction of the pipe main body is within the range of 0 to 1.50 µm.

## Description

### TECHNICAL FIELD

The present disclosure relates to an oil-well steel pipe, and more particularly relates to an oil-well steel pipe with a threaded connection formed.

### BACKGROUND ART

An oil-well steel pipe is used for drilling in oil fields and natural gas fields (hereinafter, oil fields and natural gas fields are collectively referred to as "oil wells"). Specifically, at the oil well drilling site, in accordance with the depth of the oil well, a plurality of oil-well steel pipes are connected to form an oil country tubular goods connected body as typified by a casing pipe or a tubing pipe. An oil country tubular goods connected body is formed by fastening threaded connections formed at the end portion of oil-well steel pipe to each other. Inspections may in some cases be conducted on oil country tubular goods connected bodies. When conducting an inspection, the oil country tubular goods connected body is lifted up and the threaded connection is loosened. Oil-well steel pipes that are loosened and detached from the oil country tubular goods connected body are then inspected. After the inspection, the oil-well steel pipes are refastened and reused as a part of the oil country tubular goods connected body.

An oil-well steel pipe includes a pipe main body which includes a first end portion and a second end portion. The pipe main body includes a pin that is formed at the first end portion, and a box that is formed at the second end portion. The pin has a pin contact surface including an external thread part on an outer peripheral surface of the first end portion of the pipe main body. The box has a box contact surface including an internal thread part on an inner peripheral surface of an end portion (second end portion) of the pipe main body that is on the opposite side to the pin. When threaded connections formed at the end portion of oil-well steel pipes are fastened together, the pin contact surface comes in contact with the box contact surface.

The pin contact surface and the box contact surface repeatedly experience strong friction during fastening and loosening of the oil-well steel pipe. Unless there is sufficient durability with respect to friction at these regions, galling (uncorrectable seizure) will occur during repeated fastening and loosening. Accordingly, an oil-well steel pipe is required to have sufficient durability with respect to friction, that is, to have excellent galling resistance.

Heretofore, heavy metal-containing compound greases, which are referred to as "dopes", have been used to improve the galling resistance. Application of a compound grease to the pin contact surface and/or the box contact surface can improve the galling resistance of an oil-well steel pipe. However, heavy metals contained in compound greases, such as Pb, Zn, and Cu, may affect the environment. For this reason, the development of an oil-well steel pipe that is excellent in galling resistance without the use of a compound grease is desired.

In an oil-well steel pipe disclosed in Patent Literature 1 (International Application Publication No. WO2016/170031), a Zn-Ni alloy plating layer is formed on a pin contact surface or a box contact surface instead of using a compound grease. The Zn contained in the Zn-Ni alloy plating layer formed on a contact surface of the oil-well steel pipe enhances the corrosion resistance of the base material of the oil country tubular good by sacrificial protection. In addition, it is described in Patent Literature 1 that the Zn-Ni alloy is also excellent in a wear resistance characteristic.

### CITATION LIST

### PATENT LITERATURE

Patent Literature 1: International Application Publication No. WO2016/170031

### SUMMARY OF INVENTION

### TECHNICAL PROBLEM

In this connection, in recent years there is a demand for an oil-well steel pipe that has more excellent galling resistance. In particular, in a large-sized oil-well steel pipe, because the circumference of the pipe main body is longer, sliding over a longer distance is necessary from the start of fastening until the completion of fastening. Consequently, in a large-sized oil-well steel pipe, there is a tendency for galling to occur more easily than in a conventional oil-well steel pipe. Thus, there are increasing demands for an oil-well steel pipe to have more excellent galling resistance than heretofore.

An objective of the present disclosure is to provide an oil-well steel pipe that includes a Zn-Ni alloy plating layer and which has excellent galling resistance.

### SOLUTION TO PROBLEM

An oil-well steel pipe according to the present disclosure includes:
a pipe main body including a first end portion and a second end portion,
a chemical composition of the pipe main body containing, in mass%:
   C: 0.01 to 0.60%,
   Cr: 0 to 8.0%, and
   Fe: 80.0% or more,
   wherein
   the pipe main body includes:
      a pin formed at the first end portion, and
      a box formed at the second end portion;
      the pin includes:
         a pin contact surface including an external thread part; and
         the box includes:
            a box contact surface including an internal thread part;
            the oil-well steel pipe further including:
               a Zn-Ni alloy plating layer formed on at least one of the pin contact surface and the box contact surface,
               wherein
               when a region containing C in an amount that, in mass%, is 1.5 times or more greater than a C content of the pipe main body is defined as a C-concentrated layer,
               in the Zn-Ni alloy plating layer, a thickness of the C-concentrated layer in a wall thickness direction of the pipe main body is within a range of 0 to 1.50 µm.

### ADVANTAGEOUS EFFECTS OF INVENTION

The oil-well steel pipe according to the present disclosure includes a Zn-Ni alloy plating layer, and has excellent galling resistance.

### BRIEF DESCRIPTION OF DRAWINGS

[FIG. 1] FIG. 1 is a diagram illustrating one part of results obtained when a depth profile analysis was carried out by GD-OES from the surface of a Zn-Ni alloy plating layer with respect to an oil-well steel pipe of Test Number 2 of the examples.
[FIG. 2] FIG. 2 is a diagram illustrating one part of results obtained when a depth profile analysis was carried out by GD-OES from the surface of a Zn-Ni alloy plating layer with respect to an oil-well steel pipe according to the present embodiment.
[FIG. 3] FIG. 3 is a configuration diagram illustrating one example of an oil-well steel pipe according to the present embodiment.
[FIG. 4] FIG. 4 is a partial cross-sectional view illustrating a cross section (longitudinal cross section) along a pipe axis direction of a coupling of the oil-well steel pipe illustrated in FIG. 3.
[FIG. 5] FIG. 5 is a cross-sectional view parallel to the pipe axis direction of the oil-well steel pipe illustrated in FIG. 4, that illustrates a portion in the vicinity of a pin of the oil-well steel pipe.
[FIG. 6] FIG. 6 is a cross-sectional view parallel to the pipe axis direction of the oil-well steel pipe illustrated in FIG. 4, that illustrates a portion in the vicinity of a box of the oil-well steel pipe.
[FIG. 7] FIG. 7 is a partial cross-sectional view illustrating a cross section (longitudinal cross section) along a pipe axis direction of a coupling of the oil-well steel pipe according to the present embodiment, that is different from FIG. 4.
[FIG. 8] FIG. 8 is a partial cross-sectional view illustrating an integral type oil-well steel pipe according to the present embodiment.
[FIG. 9] FIG. 9 is an enlarged view of a pin contact surface illustrated in FIG. 5.
[FIG. 10] FIG. 10 is an enlarged view of a box contact surface illustrated in FIG. 6.
[FIG. 11] FIG. 11 is an enlarged view of a pin contact surface having a different structure from that in FIG. 9.
[FIG. 12] FIG. 12 is an enlarged view of a box contact surface having a different structure from that in FIG. 10.

### DESCRIPTION OF EMBODIMENTS

The present embodiment is described in detail below with reference to the accompanying drawings. The same reference symbols will be used throughout the drawings to refer to the same or like parts, and description thereof will not be repeated.

It is already known that a Zn-Ni alloy plating layer has excellent wear resistance because of the high hardness thereof. Usually, it is considered that the higher wear resistance is, the higher galling resistance will be. Therefore, a Zn-Ni alloy plating layer has been applied in an oil-well steel pipe in which galling resistance is required. On the other hand, as mentioned above, in a large-diameter oil-well steel pipe, the sliding distance during fastening and loosening is longer than in the case of a conventional oil-well steel pipe. Therefore, even among oil-well steel pipes which have a Zn-Ni alloy plating layer, in a case where the oil-well steel pipe is a large-diameter oil-well steel pipe, excellent galling resistance has not been obtained in some cases.

In addition, as the result of detailed studies conducted by the present inventors it was revealed that the chemical composition of the pipe main body on which the Zn-Ni alloy plating layer is formed also influences galling resistance. Specifically, the present inventors found that when the chemical composition of a pipe main body contains, in mass%, C: 0.01 to 0.60%, Cr: 0 to 8.0% and Fe: 80.0% or more, in particular in a large-sized oil-well steel pipe, the galling resistance is liable to decrease. Therefore, the present inventors produced various oil-well steel pipes which had a pipe main body having the aforementioned chemical composition and had a Zn-Ni alloy plating layer, and carried out detailed investigations regarding the galling resistance of these oil-well steel pipes.

As a result, it was revealed that in the case of an oil-well steel pipe in which excellent galling resistance is not obtained, a part of the Zn-Ni alloy plating layer peels off due to sliding for a long distance during fastening and loosening. That is, it is considered that, as the result of a part of the Zn-Ni alloy plating layer peeling off, the coefficient of friction of contact surface increases all at once, and the galling resistance of the oil-well steel pipe rapidly decreases.

Therefore, the present inventors carried out more detailed investigations regarding an oil-well steel pipe in which excellent galling resistance is not obtained despite having a pipe main body which has the aforementioned chemical composition and also having a Zn-Ni alloy plating layer, and considered what caused the problem. Specifically, the present inventors subjected oil-well steel pipes in which, despite having a pipe main body with the aforementioned chemical composition and having a Zn-Ni alloy plating layer, a part of the Zn-Ni alloy plating layer peeled off due to sliding for a long distance during fastening and loosening to elemental analysis in the depth direction from the surface of the Zn-Ni alloy plating layer, by glow discharge optical emission spectrometry (GD-OES). This will now be described specifically using the drawings.

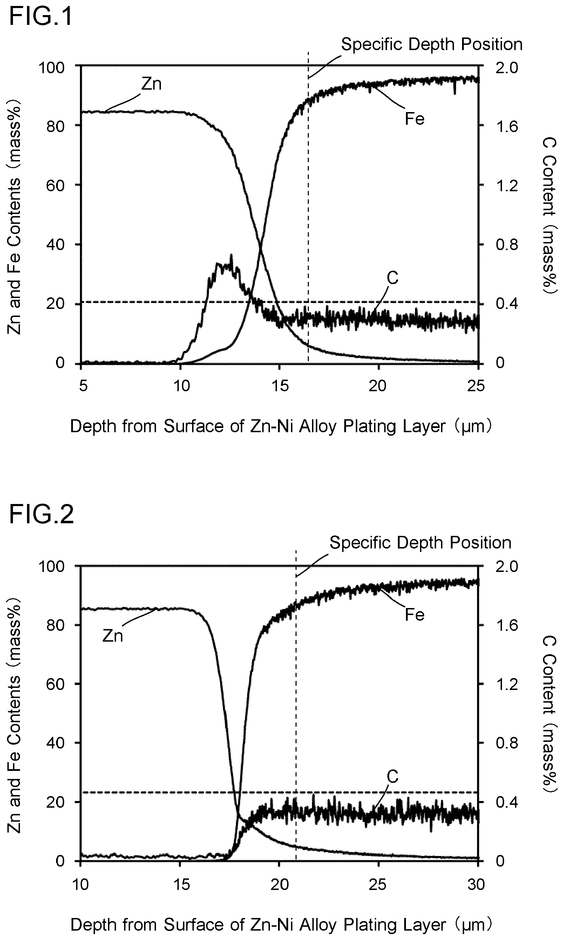

FIG. 1 is a diagram illustrating one part of results obtained when a depth profile analysis was carried out by GD-OES from the surface of a Zn-Ni alloy plating layer with respect to an oil-well steel pipe of Test Number 2 of the examples. FIG. 1 was obtained by a method to be described later. More specifically, FIG. 1 illustrates a content profile in a depth direction obtained by carrying out a depth profile analysis by GD-OES and plotting the depth (µm) from the Zn-Ni alloy plating layer surface on the abscissa and plotting the respective contents (mass%) of Zn, Fe and C on the ordinate. Note that, the term "depth direction" of the Zn-Ni alloy plating layer used here corresponds to the wall thickness direction of the pipe main body.

Referring to FIG. 1, when the oil-well steel pipe was subjected to depth profile analysis by GD-OES from the surface of the Zn-Ni alloy plating layer, in the vicinity of the boundary between the Zn-Ni alloy plating layer and the pipe main body, a decrease in the Zn content originating from the Zn-Ni alloy plating layer and an increase in the Fe content originating from the pipe main body could be confirmed. Referring further to FIG. 1, in an oil-well steel pipe that did not have excellent galling resistance, a region in which the C content increased locally could be confirmed in the vicinity of the boundary between the Zn-Ni alloy plating layer and the pipe main body. In the present description, a region in which the C content is 1.5 times or more greater than the C content of the pipe main body is also referred to as a "C-concentrated layer". Referring to FIG. 1, a C content that is 1.5 times of the C content of the pipe main body is indicated by a broken line in the drawing. That is, referring to FIG. 1, a region in which the C content is more than the content indicated by the broken line corresponds to a C-concentrated layer.

Therefore, with regard to an oil-well steel pipe having a pipe main body with the aforementioned chemical composition and having an Zn-Ni alloy plating layer, the present inventors thought that there is a possibility of increasing the galling resistance of the oil-well steel pipe by making the C-concentrated layer in the Zn-Ni alloy plating layer thinner. In this case, even if fastening and loosening are repeated with high interfacial pressure, there is a possibility that it will become difficult for the Zn-Ni alloy plating layer to peel off. Specifically, the present inventors produced various oil-well steel pipes having a pipe main body with the aforementioned chemical composition and having a Zn-Ni alloy plating layer, and conducted detailed investigations regarding the thickness of a C-concentrated layer in the Zn-Ni alloy plating layer and the galling resistance of the various oil-well steel pipes.

As a result, the present inventors discovered that an oil-well steel pipe in which a C-concentrated layer in the Zn-Ni alloy plating layer was made thin can be obtained, and that the galling resistance is increased in such an oil-well steel pipe. FIG. 2 is a diagram illustrating one part of results obtained when a depth profile analysis was carried out by GD-OES from the surface of a Zn-Ni alloy plating layer with respect to an oil-well steel pipe according to the present embodiment. FIG. 2 is a content profile in a depth direction relating to Test Number 3 in the examples to be described later. FIG. 2 was obtained by a method to be described later.

Referring to FIG. 1 and FIG. 2, in the oil-well steel pipe according to the present embodiment, the C-concentrated layer in the Zn-Ni alloy plating layer is thin. In addition, as shown in detail in the examples to be described later, in the case of the oil-well steel pipe illustrated in FIG. 1, the number of times that fastening and loosening could be performed without galling was five times. On the other hand, in the case of the oil-well steel pipe illustrated in FIG. 2, fastening and loosening could be performed 10 or more times without galling.

That is to say, it was revealed by the detailed investigations carried out by the present inventors that in the case of an oil-well steel pipe having a pipe main body with the aforementioned chemical composition and having a Zn-Ni alloy plating layer, making a C-concentrated layer in the Zn-Ni alloy plating layer thin markedly increases the galling resistance of the oil-well steel pipe even in a case where a sliding distance is long. The reason for this has not been clarified in detail. However, the present inventors conjecture that the reason is as follows.

A pin and a box that are formed at end portions of a pipe main body of an oil-well steel pipe are formed by cutting work. Because heat is applied to the surface of the pin and the box during the cutting work, an oxide film is formed on the surface of the pin and the box after the cutting work. Therefore, in order to remove the oxide film formed by the cutting work, of the entire surface of the pin and/or box that was subjected to the cutting work, a region in which a Zn-Ni alloy plating layer was formed has been subjected to pickling or the like to remove the oxide film.

On the other hand, as mentioned above, the oil-well steel pipe according to the present embodiment has a pipe main body with a chemical composition that contains, in mass%, C: 0.01 to 0.60%, Cr: 0 to 8.0% and Fe: 80.0% or more. Therefore, a passivation film which is formed in the case of a stainless steel material that has a large Cr content is not formed. In short, in the pipe main body according to the present embodiment having the aforementioned chemical composition, an unstable oxide film is apt to form on the surface of the pin and the box during a cutting work. In addition, because the pin and the box have a complicated shape, the cutting conditions are different for each region, and the cutting temperatures and cutting speeds differ from each other. Consequently, in the pipe main body having the aforementioned chemical composition, an oxide film whose thickness differs for each region is liable to be formed on the surface of the pin and the surface of the box.

However, in a case where an oxide film whose thickness differs for each region is formed, even when pickling is performed under uniform conditions, there is a possibility that a part of the oxide film will remain or, conversely, that the pipe main body will partially dissolve. In particular, if the pipe main body partially dissolves, in some cases impurities originating from carbon (C) of the pipe main body may remain at the surface of the pin and/or box. The present inventors conjecture that a C-concentrated layer is thickly formed in the Zn-Ni alloy plating layer as a result of the Zn-Ni alloy plating layer being formed while a large amount of impurities originating from C remain on the surface.

As a result of detailed studies based on the above findings, the present inventors discovered that, in an oil-well steel pipe having a pipe main body with a chemical composition containing, in mass%, C: 0.01 to 0.60%, Cr: 0 to 8.0% and Fe: 80.0% or more, in a Zn-Ni alloy plating layer, if the thickness of a C-concentrated layer in the wall thickness direction of the pipe main body is made to fall within a range of 0 to 1.50 µm, excellent galling resistance is obtained, even if the oil-well steel pipe is a large-diameter oil-well steel pipe.

The oil-well steel pipe according to the present embodiment that was completed based on the above findings has the following structures.
[1] An oil-well steel pipe, including:
   a pipe main body including a first end portion and a second end portion,
   a chemical composition of the pipe main body containing, in mass%:
      C: 0.01 to 0.60%,
      Cr: 0 to 8.0%, and
      Fe: 80.0% or more,
      wherein
      the pipe main body includes:
         a pin formed at the first end portion, and
         a box formed at the second end portion;
         the pin includes:
            a pin contact surface including an external thread part; and
            the box includes:
               a box contact surface including an internal thread part;
               the oil-well steel pipe further including:
                  a Zn-Ni alloy plating layer formed on at least one of the pin contact surface and the box contact surface,
                  wherein
                  when a region containing C in an amount that, in mass%, is 1.5 times or more greater than a C content of the pipe main body is defined as a C-concentrated layer,
                  in the Zn-Ni alloy plating layer, a thickness of the C-concentrated layer in a wall thickness direction of the pipe main body is within a range of 0 to 1.50 µm.
[2] The oil-well steel pipe according to [1], wherein
   a thickness of the Zn-Ni alloy plating layer is within a range of 5 to 25 µm.
[3] The oil-well steel pipe according to [1] or [2], including:
   a lubricant coating on or above the Zn-Ni alloy plating layer.

Hereunder, the oil-well steel pipe according to the present embodiment is described in detail.

### [Structure of oil-well steel pipe]

First, the structure of the oil-well steel pipe according to the present embodiment will be described. The oil-well steel pipe has a well-known structure. The available types of oil-well steel pipe are a T&C type oil-well steel pipe and an integral type oil-well steel pipe. Hereunder, each type of oil-well steel pipe is described in detail.

### [Case where oil-well steel pipe is T&C type]

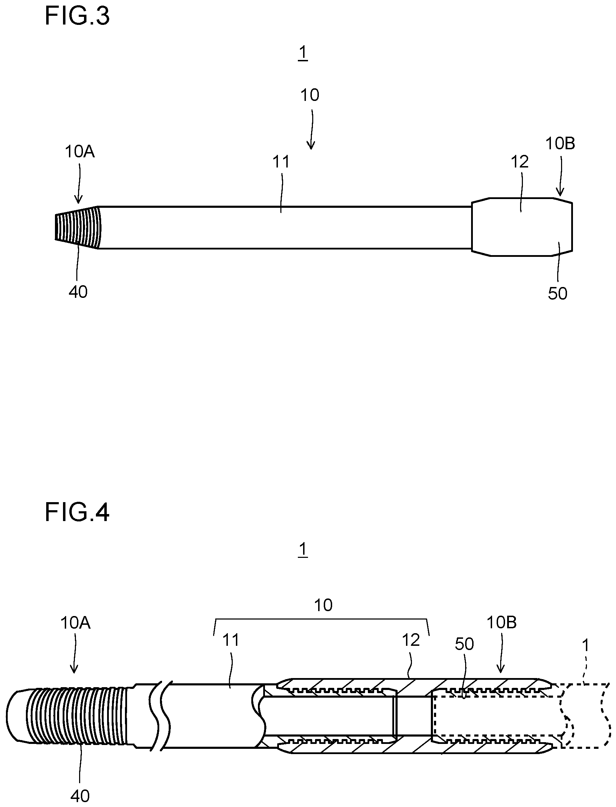

FIG. 3 is a configuration diagram illustrating one example of an oil-well steel pipe 1 according to the present embodiment. FIG. 3 is a configuration diagram illustrating the oil-well steel pipe 1 of a so-called "T&C (threaded and coupled) type". Referring to FIG. 3, the oil-well steel pipe 1 includes a pipe main body 10.

The pipe main body 10 extends in the pipe axis direction. A cross section perpendicular to the pipe axis direction of the pipe main body 10 is a circular shape. The pipe main body 10 includes a first end portion 10A and a second end portion 10B. The first end portion 10A is an end portion on the opposite side to the second end portion 10B. In the T&C type oil-well steel pipe 1 illustrated in FIG. 3, the pipe main body 10 includes a pin tube body 11 and a coupling 12. The coupling 12 is attached to one end of the pin tube body 11. More specifically, the coupling 12 is fastened by threading to one end of the pin tube body 11.

FIG. 4 is a partial cross-sectional view illustrating a cross section (longitudinal cross section) that is parallel to the pipe axis direction of the coupling 12 of the oil-well steel pipe 1 illustrated in FIG. 3. Referring to FIG. 3 and FIG. 4, the pipe main body 10 includes a pin 40 and a box 50. The pin 40 is formed at the first end portion 10A of the pipe main body 10. When performing fastening, the pin 40 is inserted into the box 50 of another oil-well steel pipe 1 (not illustrated), and is fastened by threading to the box 50 of the other oil-well steel pipe 1.

The box 50 is formed at the second end portion 10B of the pipe main body 10. When performing fastening, the pin 40 of another oil-well steel pipe 1 is inserted into the box 50, and the box 50 is fastened by threading to the pin 40 of the other oil-well steel pipe 1.

### [Regarding structure of pin]

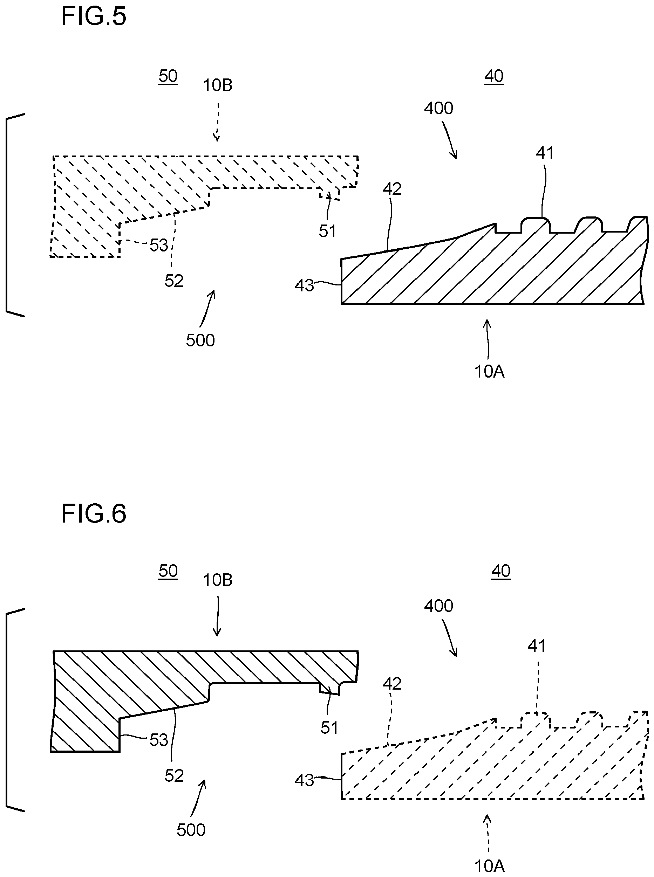

FIG. 5 is a cross-sectional view of a portion in the vicinity of the pin 40 of the oil-well steel pipe 1 illustrated in FIG. 4, that is a cross-sectional view parallel to the pipe axis direction of the oil-well steel pipe 1. A dashed line portion in FIG. 5 represents the structure of the box 50 of another oil-well steel pipe in the case of fastening the oil-well steel pipe 1 to another oil-well steel pipe 1. Referring to FIG. 5, the pin 40 includes a pin contact surface 400 on the outer peripheral surface of the first end portion 10A of the pipe main body 10. The pin contact surface 400 contacts the box 50 of the other oil-well steel pipe 1 when performing fastening to the other oil-well steel pipe 1.

The pin contact surface 400 includes at least an external thread part 41 formed in the outer peripheral surface of the first end portion 10A. The pin contact surface 400 may further include a pin sealing surface 42 and a pin shoulder surface 43. In FIG. 5, on the outer peripheral surface of the first end portion 10A, the pin sealing surface 42 is disposed further on the front end side of the first end portion 10A than the external thread part 41. In other words, the pin sealing surface 42 is disposed between the external thread part 41 and the pin shoulder surface 43. The pin sealing surface 42 is provided in a tapered shape. Specifically, the external diameter of the pin sealing surface 42 gradually decreases from the external thread part 41 toward the pin shoulder surface 43 in the longitudinal direction (pipe axis direction) of the first end portion 10A.

When performing fastening with another oil-well steel pipe 1, the pin sealing surface 42 contacts a box sealing surface 52 (described later) of the box 50 of the other oil-well steel pipe 1. More specifically, during fastening, when the pin 40 is inserted into the box 50 of the other oil-well steel pipe 1, the pin sealing surface 42 contacts the box sealing surface 52. Subsequently, when the pin 40 is screwed further into the box 50 of the other oil-well steel pipe 1, the pin sealing surface 42 closely contacts the box sealing surface 52. By this means, during fastening, the pin sealing surface 42 closely contacts the box sealing surface 52 to thereby form a seal that is based on metal-to-metal contact. Therefore, the gastightness can be increased in each of the oil-well steel pipes 1 that are fastened to each other.

In FIG. 5, the pin shoulder surface 43 is disposed at the front end face of the first end portion 10A. In other words, in the pin 40 illustrated in FIG. 5, the external thread part 41, the pin sealing surface 42 and the pin shoulder surface 43 are disposed sequentially in that order from the center of the pipe main body 10 toward the first end portion 10A. During fastening to another oil-well steel pipe 1, the pin shoulder surface 43 opposes and contacts a box shoulder surface 53 (described later) of the box 50 of the other oil-well steel pipe 1. More specifically, during fastening, the pin shoulder surface 43 contacts the box shoulder surface 53 as a result of the pin 40 being inserted into the box 50 of the other oil-well steel pipe 1. By this means, during fastening, a high torque can be obtained. Further, the positional relation between the pin 40 and the box 50 in the fastening state can be stabilized.

Note that, the pin contact surface 400 of the pin 40 includes at least the external thread part 41. In other words, the pin contact surface 400 may include the external thread part 41, and need not include the pin sealing surface 42 and the pin shoulder surface 43. The pin contact surface 400 may include the external thread part 41 and the pin shoulder surface 43, and need not include the pin sealing surface 42. The pin contact surface 400 may include the external thread part 41 and the pin sealing surface 42, and need not include the pin shoulder surface 43.

### [Regarding structure of box]

FIG. 6 is a cross-sectional view of a portion in the vicinity of the box 50 of the oil-well steel pipe 1 illustrated in FIG. 4, that is a cross-sectional view parallel to the pipe axis direction of the oil-well steel pipe 1. A dashed line portion in FIG. 6 represents the structure of the pin 40 of another oil-well steel pipe 1 in the case of fastening the oil-well steel pipe 1 to another oil-well steel pipe 1. Referring to FIG. 6, the box 50 includes a box contact surface 500 on the inner peripheral surface of the second end portion 10B of the pipe main body 10. When performing fastening to another oil-well steel pipe 1, the box contact surface 500 contacts the pin contact surface 400 of the pin 40 of the other oil-well steel pipe 1 when the pin 40 is screwed into the box 50.

The box contact surface 500 includes at least an internal thread part 51 formed in the inner peripheral surface of the second end portion 10B. When performing fastening, the internal thread part 51 engages with the external thread part 41 of the pin 40 of the other oil-well steel pipe.

The box contact surface 500 may further include the box sealing surface 52 and the box shoulder surface 53. In FIG. 6, on the inner peripheral surface of the second end portion 10B, the box sealing surface 52 is disposed further on the pipe main body 10 side than the internal thread part 51. In other words, the box sealing surface 52 is disposed between the internal thread part 51 and the box shoulder surface 53. The box sealing surface 52 is provided in a tapered shape. Specifically, the internal diameter of the box sealing surface 52 gradually decreases from the internal thread part 51 toward the box shoulder surface 53 in the longitudinal direction (pipe axis direction) of the second end portion 10B.

When performing fastening to another oil-well steel pipe 1, the box sealing surface 52 contacts the pin sealing surface 42 of the pin 40 of the other oil-well steel pipe 1. More specifically, during fastening, when the pin 40 of the other oil-well steel pipe 1 is screwed into the box 50, the box sealing surface 52 contacts the pin sealing surface 42, and when the pin 40 is screwed in further, the box sealing surface 52 closely contacts the pin sealing surface 42. By this means, during fastening, the box sealing surface 52 closely contacts the pin sealing surface 42 to thereby form a seal that is based on metal-to-metal contact. Therefore, the gastightness can be increased in each of the oil-well steel pipes 1 that are fastened to each other.

The box shoulder surface 53 is disposed further on the pipe main body 10 side than the box sealing surface 52. In other words, in the box 50, the box shoulder surface 53, the box sealing surface 52 and the internal thread part 51 are disposed sequentially in that order from the center of the pipe main body 10 toward the front end of the second end portion 10B. When performing fastening to another oil-well steel pipe 1, the box shoulder surface 53 opposes and contacts the pin shoulder surface 43 of the pin 40 of the other oil-well steel pipe 1. More specifically, during fastening, the box shoulder surface 53 contacts the pin shoulder surface 43 as a result of the pin 40 of the other oil-well steel pipe 1 being inserted into the box 50. By this means, during fastening, a high torque can be obtained. Further, the positional relation between the pin 40 and the box 50 in the fastening state can be stabilized.

The box contact surface 500 includes at least the internal thread part 51. When performing fastening, the internal thread part 51 of the box contact surface 500 of the box 50 contacts the external thread part 41 of the pin contact surface 400 of the pin 40 in a manner such that the internal thread part 51 corresponds with the external thread part 41. The box sealing surface 52 contacts the pin sealing surface 42 in a manner such that the box sealing surface 52 corresponds with the pin sealing surface 42. The box shoulder surface 53 contacts the pin shoulder surface 43 in a manner such that the box shoulder surface 53 corresponds with the pin shoulder surface 43.

In a case where the pin contact surface 400 includes the external thread part 41 and does not include the pin sealing surface 42 and the pin shoulder surface 43, the box contact surface 500 includes the internal thread part 51 and does not include the box sealing surface 52 and the box shoulder surface 53. In a case where the pin contact surface 400 includes the external thread part 41 and the pin shoulder surface 43 and does not include the pin sealing surface 42, the box contact surface 500 includes the internal thread part 51 and the box shoulder surface 53 and does not include the box sealing surface 52. In a case where the pin contact surface 400 includes the external thread part 41 and the pin sealing surface 42 and does not include the pin shoulder surface 43, the box contact surface 500 includes the internal thread part 51 and the box sealing surface 52 and does not include the box shoulder surface 53.

The pin contact surface 400 may include a plurality of the external thread parts 41, may include a plurality of the pin sealing surfaces 42, and may include a plurality of the pin shoulder surfaces 43. For example, the pin shoulder surface 43, the pin sealing surface 42, the external thread part 41, the pin sealing surface 42, the pin shoulder surface 43, the pin sealing surface 42 and the external thread part 41 may be disposed in that order on the pin contact surface 400 of the pin 40 from the front end of the first end portion 10A toward the center of the pipe main body 10. In such case, the internal thread part 51, the box sealing surface 52, the box shoulder surface 53, the box sealing surface 52, the internal thread part 51, the box sealing surface 52 and the box shoulder surface 53 are disposed in that order on the box contact surface 500 of the box 50 from the front end of the second end portion 10B toward the center of the pipe main body 10.

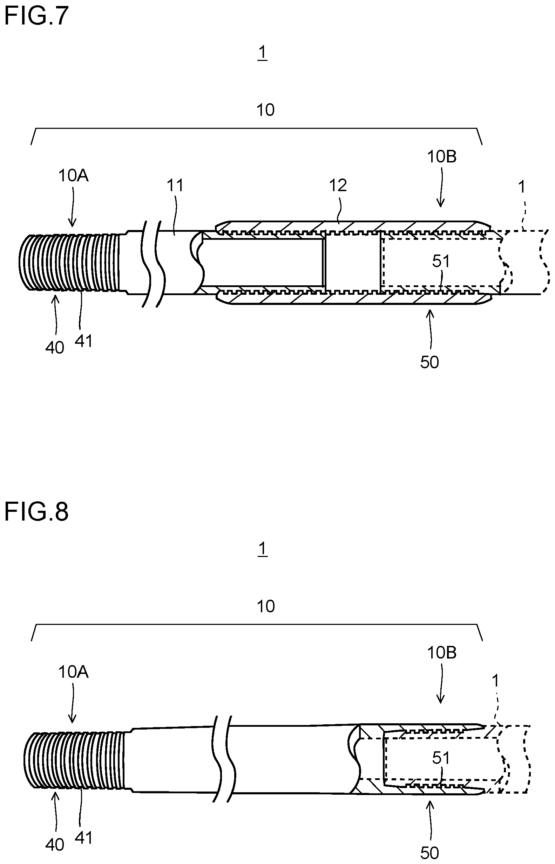

In FIG. 5 and FIG. 6, a so-called "premium joint" is illustrated in which the pin 40 includes the external thread part 41, the pin sealing surface 42 and the pin shoulder surface 43, and the box 50 includes the internal thread part 51, the box sealing surface 52 and the box shoulder surface 53. However, as described above, the pin 40 may include the external thread part 41 and need not include the pin sealing surface 42 and the pin shoulder surface 43. In this case, the box 50 includes the internal thread part 51 and does not include the box sealing surface 52 and the box shoulder surface 53. FIG. 7 is a view illustrating one example of the oil-well steel pipe 1 in which the pin 40 includes the external thread part 41 and does not include the pin sealing surface 42 and the pin shoulder surface 43, and the box 50 includes the internal thread part 51 and does not include the box sealing surface 52 and the box shoulder surface 53. The oil-well steel pipe 1 according to the present embodiment may have the structure illustrated in FIG. 7.

### [Case where oil-well steel pipe is integral type]

The oil-well steel pipe 1 illustrated in FIG. 3, FIG. 4 and FIG. 7 is a so-called "T&C type" oil-well steel pipe 1, in which the pipe main body 10 includes the pin tube body 11 and the coupling 12. However, the oil-well steel pipe 1 according to the present embodiment may be an integral type instead of a T&C type.

FIG. 8 is a partial cross-sectional view of an integral type oil-well steel pipe 1 according to the present embodiment. Referring to FIG. 8, the integral type oil-well steel pipe 1 includes a pipe main body 10. The pipe main body 10 includes a first end portion 10A and a second end portion 10B. The first end portion 10A is disposed on the opposite side to the second end portion 10B. As described above, in the T&C type oil-well steel pipe 1, the pipe main body 10 includes the pin tube body 11 and the coupling 12. In other words, in the T&C type oil-well steel pipe 1, the pipe main body 10 is constituted by fastening two separate members (the pin tube body 11 and the coupling 12). In contrast, in the integral type oil-well steel pipe 1, the pipe main body 10 is formed in an integral manner.

The pin 40 is formed at the first end portion 10A of the pipe main body 10. When performing fastening, the pin 40 is inserted in and screwed into the box 50 of another integral type oil-well steel pipe 1, and thereby fastened to the box 50 of the other integral type oil-well steel pipe 1. The box 50 is formed at the second end portion 10B of the pipe main body 10. When performing fastening, the pin 40 of another integral type oil-well steel pipe 1 is inserted in and screwed into the box 50, to thereby fasten the box 50 to the pin 40 of the other integral type oil-well steel pipe 1.

The structure of the pin 40 of the integral type oil-well steel pipe 1 is the same as the structure of the pin 40 of the T&C type oil-well steel pipe 1 illustrated in FIG. 5. Similarly, the structure of the box 50 of the integral type oil-well steel pipe 1 is the same as the structure of the box 50 of the T&C type oil-well steel pipe 1 illustrated in FIG. 6. Note that, in FIG. 8, the pin shoulder surface, the pin sealing surface and the external thread part 41 in the pin 40 are disposed in that order from the front end of the first end portion 10A toward the center of the pipe main body 10. Therefore, the internal thread part 51, the box sealing surface and the box shoulder surface in the box 50 are disposed in that order from the front end of the second end portion 10B toward the center of the pipe main body 10. However, similarly to FIG. 5, it suffices that the pin contact surface 400 of the pin 40 of the integral type oil-well steel pipe 1 includes at least the external thread part 41. Further, similarly to FIG. 6, it suffices that the box contact surface 500 of the box 50 of the integral type oil-well steel pipe 1 includes at least the internal thread part 51.

In short, the oil-well steel pipe 1 according to the present embodiment may be a T&C type or may be an integral type.

### [Regarding chemical composition of pipe main body]

In the oil-well steel pipe 1 according to the present embodiment, the chemical composition of a pipe main body 10 contains, in mass%, C: 0.01 to 0.60%, Cr: 0 to 8.0% and Fe: 80.0% or more. That is, in the oil-well steel pipe 1 according to the present embodiment, as long as the chemical composition of the pipe main body 10 contains 0.01 to 0.60% of carbon (C) and 80.0% or more of iron (Fe) and does not contain more than 8.0% of chromium (Cr), the chemical composition is not particularly limited and may also contain other elements. Note that, in the present description, the symbol "%" used in relation to an element means "mass percent".

The pipe main body 10 of the oil-well steel pipe 1 according to the present embodiment may, for example, have a chemical composition consisting of C: 0.01 to 0.60%, Cr: 0 to 8.00%, P: 0.100% or less, S: 0.100% or less, N: 0.100% or less, O: 0.100% or less, Si: 0 to 2.0%, Mn: 0 to 2.0%, Al: 0 to 1.0%, Mo: 0 to 5.0%, V: 0 to 2.0%, Nb: 0 to 1.0%, Ti: 0 to 1.0%, B: 0 to 1.0%, Ca: 0 to 1.0%, Mg: 0 to 1.0%, Zr: 0 to 1.0%, rare earth metal: 0 to 1.0%, Co: 0 to 5.0%, W: 0 to 5.0%, Ni: 0 to 3.0% and Cu: 0 to 3.0%, with the balance being 80.0% or more of Fe and impurities. Here, the term "impurities" means elements which, during industrial production of the steel material, are mixed in from ore or scrap that is used as a raw material of the steel material, or from the production environment or the like, and which are allowed within a range that does not adversely affect the steel material according to the present embodiment.

In the oil-well steel pipe 1 according to the present embodiment, in some cases a C-concentrated layer is formed in a Zn-Ni alloy plating layer to be described later. In this regard, the higher the C content is in the chemical composition of the pipe main body 10, the easier it is for a C-concentrated layer to be thickly formed. However, in the case of the oil-well steel pipe according to the present embodiment, even if the chemical composition of the pipe main body 10 includes, for example, 0.10% or more of C, the thickness of the C-concentrated layer can be made to fall within the range of 0 to 1.50 µm.

Thus, the pipe main body 10 of the oil-well steel pipe 1 according to the present embodiment may have a chemical composition containing, in mass%, C: 0.10 to 0.60%, Cr: 0 to 8.0% and Fe: 80.0% or more, or may have a chemical composition containing C: 0.15 to 0.60%, Cr: 0 to 8.0% and Fe: 80.0% or more. Even in these cases, in the oil-well steel pipe 1 according to the present embodiment, in the Zn-Ni alloy plating layer, the thickness of the C-concentrated layer in the wall thickness direction of the pipe main body 10 can be made to fall within the range of 0 to 1.50 µm.

### [Zn-Ni alloy plating layer]

In the oil-well steel pipe 1 according to the present embodiment, a Zn-Ni alloy plating layer is formed on at least one contact surface of the pin contact surface 400 and the box contact surface 500. In other words, the Zn-Ni alloy plating layer may be formed on the pin contact surface 400, and need not be formed on the box contact surface 500. Alternatively, the Zn-Ni alloy plating layer may be formed on the box contact surface 500, and need not be formed on the pin contact surface 400. Further, the Zn-Ni alloy plating layer may be formed on the pin contact surface 400 and on the box contact surface 500.

In the following description, the structure on the pin contact surface 400 in a case where the Zn-Ni alloy plating layer is formed on the pin contact surface 400, and the structure on the box contact surface 500 in a case where the Zn-Ni alloy plating layer is formed on the box contact surface 500 are described.

### [Structure on pin contact surface in case where Zn-Ni alloy plating layer is formed on pin contact surface]

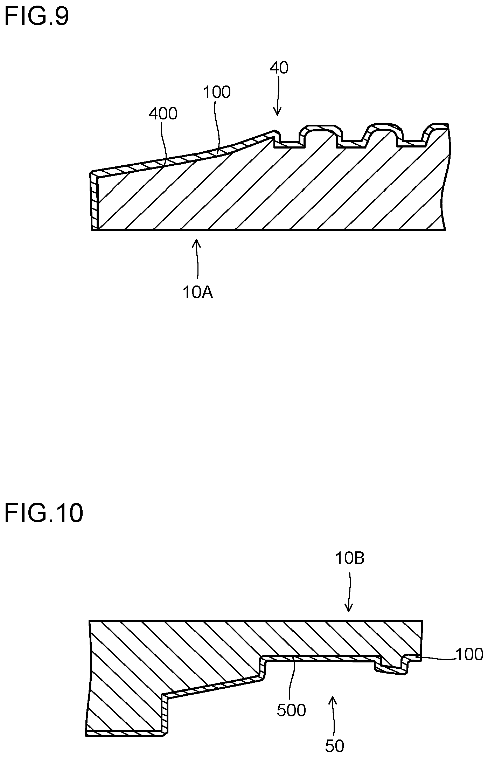

FIG. 9 is a cross-sectional view of the vicinity of the pin contact surface 400 in a case where the Zn-Ni alloy plating layer 100 is formed on the pin contact surface 400. Referring to FIG. 9, the oil-well steel pipe 1 further includes the Zn-Ni alloy plating layer 100 formed on the pin contact surface 400 of the pin 40.

The Zn-Ni alloy plating layer 100 may be formed on one part of the pin contact surface 400 or may be formed on the entire pin contact surface 400. The interfacial pressure increases, in particular, in the final stage of fastening at the pin sealing surface 42. Therefore, in a case where the Zn-Ni alloy plating layer 100 is partially formed on the pin contact surface 400, the Zn-Ni alloy plating layer 100 is preferably formed on at least the pin sealing surface 42. As mentioned above, the Zn-Ni alloy plating layer 100 may be formed on the entire pin contact surface 400.

### [Structure on box contact surface in case where Zn-Ni alloy plating layer is formed on box contact surface]

FIG. 10 is a cross-sectional view of the vicinity of the box contact surface 500 in a case where the Zn-Ni alloy plating layer 100 is formed on the box contact surface 500. Referring to FIG. 10, in this case, the Zn-Ni alloy plating layer 100 is formed on the box contact surface 500. The Zn-Ni alloy plating layer 100 may be formed on one part of the box contact surface 500 or may be formed on the entire box contact surface 500. The interfacial pressure increases, in particular, in the final stage of fastening at the box sealing surface 52. Therefore, in a case where the Zn-Ni alloy plating layer 100 is partially formed on the box contact surface 500, the Zn-Ni alloy plating layer 100 is preferably formed on at least the box sealing surface 52.

### [Composition of Zn-Ni alloy plating layer]

As described above, the Zn-Ni alloy plating layer 100 is formed on at least one contact surface among the pin contact surface 400 and the box contact surface 500. Here, the Zn-Ni alloy plating layer 100 is composed of a Zn-Ni alloy. Specifically, the Zn-Ni alloy contains zinc (Zn) and nickel (Ni). In some cases the Zn-Ni alloy also contains impurities. Here, the term "impurities" of the Zn-Ni alloy refers to substances other than Zn and Ni that are contained in the Zn-Ni alloy plating layer 100 during production and the like of the oil-well steel pipe 1, and whose contents are within a range that does not influence the effects of the present embodiment.

Here, the Zn-Ni alloy plating layer 100 contains Zn. Zn is a base metal in comparison to Fe. Therefore, the Zn-Ni alloy plating layer 100 is corroded with priority relative to the steel material (sacrificial protection). By this means, the corrosion resistance property of the oil-well steel pipe 1 is improved.

The chemical composition of the Zn-Ni alloy plating layer 100 can be measured by the following method. A sample including the Zn-Ni alloy plating layer 100 (sample including a contact surface on which the Zn-Ni alloy plating layer 100 is formed) is taken from the oil-well steel pipe 1. The Zn-Ni alloy plating layer 100 of the obtained sample is dissolved in hydrochloric acid at 10% concentration to obtain a liquid solution. The obtained liquid solution is subjected to elemental analysis by Inductively Coupled Plasma Atomic Emission Spectrometry (ICP-AES), and the Ni content (mass%) and Zn content (mass%) in the Zn-Ni alloy plating layer 100 are determined.

### [Thickness of Zn-Ni alloy plating layer 100]

The thickness of the Zn-Ni alloy plating layer 100 is not particularly limited. The thickness of the Zn-Ni alloy plating layer 100 is, for example, 1 to 20 µm. If the thickness of the Zn-Ni alloy plating layer 100 is 1 µm or more, the galling resistance can be further improved. Even if the thickness of the Zn-Ni alloy plating layer 100 is more than 20 µm, the aforementioned effects will be saturated. The lower limit of the thickness of the Zn-Ni alloy plating layer 100 is preferably 3 µm, and more preferably is 5 µm. The upper limit of the thickness of the Zn-Ni alloy plating layer 100 is preferably 18 µm, and more preferably is 15 µm.

The thickness of the Zn-Ni alloy plating layer 100 in the present embodiment can be measured by the following method. The thickness of the Zn-Ni alloy plating layer 100 is measured at an arbitrary four locations on the pin contact surface 400 or the box contact surface 500 on which the Zn-Ni alloy plating layer 100 is formed, using an eddy current phase-type coating thickness gauge PHASCOPE PMP10 manufactured by Helmut Fischer GmbH. The measurement is performed by a method conforming to ISO (International Organization for Standardization) 21968 (2005). The measurement locations are four locations (four locations at 0°, 90°, 180° and 270°) in the pipe circumferential direction of the oil-well steel pipe 1. The arithmetic mean value of the measurement results is taken as the thickness of the Zn-Ni alloy plating layer 100.

### [C-concentrated layer]

In the oil-well steel pipe 1 according to the present embodiment, when, in the Zn-Ni alloy plating layer 100, a region that contains C in an amount that is a multiple of 1.5 times or more greater than the C content of the pipe main body 10 is defined as a "C-concentrated layer", the thickness of the C-concentrated layer in the wall thickness direction of the pipe main body 10 is within the range of 0 to 1.50 µm. In this case, the oil-well steel pipe 1 has excellent galling resistance.

As mentioned above, in the oil-well steel pipe 1, because the pin and the box have a complicated shape, and because of having the aforementioned chemical composition, impurities originating from C are liable to remain on the outer layer of the pin contact surface 400 and the box contact surface 500. It is considered that, if the Zn-Ni alloy plating layer 100 is formed in a state in which impurities originating from C remain on the outer layer, a C-concentrated layer will be thickly formed in the Zn-Ni alloy plating layer 100. In the present description, the term "C-concentrated layer" means a region in which the C content is 1.5 times or more greater than the C content of the pipe main body 10.

In the oil-well steel pipe 1 according to the present embodiment, the thickness of the C-concentrated layer in the wall thickness direction of the pipe main body 10 is preferably thin. A preferable upper limit of the thickness of the C-concentrated layer is 1.00 µm, more preferably is 0.80 µm, further preferably is 0.50 µm, more preferably is 0.30 µm, and further preferably is 0.10 µm. The thickness of the C-concentrated layer may be 0 µm. In such a case, because there is no C-concentrated layer, the adhesion of the Zn-Ni alloy plating layer 100 to the pipe main body 10 will be extremely high, and the galling resistance of the oil-well steel pipe 1 can be further enhanced.

The thickness of the C-concentrated layer in the present embodiment can be determined as follows. Specifically, elemental analysis in the depth direction is carried out using GD-OES from the surface of the Zn-Ni alloy plating layer 100. The measurement conditions of the GD-OES are as follows. The GD-OES is carried out using, for example, a Marcus-type high-frequency glow discharge emission spectroscopic analyzer (GD-Profiler 2) manufactured by HORIBA, Ltd. In this case, the measurement mode is set to pulsed sputtering mode, and high purity argon (Ar) gas is used as the sputtering gas. In addition, the discharge area is set to 2 mm φ, the RF output is set to 20 W, and the Ar pressure is set to 700 Pa, and elemental analysis is conducted in the depth direction (wall thickness direction of the pipe main body 10) of the Zn-Ni alloy plating layer 100.

A depth profile analysis is carried out by GD-OES using the aforementioned measurement conditions, and a content profile in the depth direction is created (see FIG. 1 and FIG. 2) in which the depth (µm) from the surface of the Zn-Ni alloy plating layer 100 is plotted on the abscissa and the contents (mass%) of Zn, Fe, and C are plotted on the ordinate. In FIG. 1 and FIG. 2, the Zn content and the Fe content are represented using a first axis, and the C content is represented using a second axis. The respective contents are plotted in this manner because the C content is extremely small in comparison to the Zn content and the Fe content, however, the Zn content, the Fe content and the C content may also all be represented using the same axis. Further, the thickness of the Zn-Ni alloy plating layer 100 formed on the oil-well steel pipe 1 that was measured differs between FIG. 1 and FIG. 2. Therefore, the numerical values described on the abscissa differ between FIG. 1 and FIG. 2.

Referring to FIG. 1 and FIG. 2, in the content profiles in the depth direction obtained by GD-OES, a region in which the Zn content is stable, a region in which the Zn content decreases and the Fe content increases, and a region in which the Fe content is stable are confirmed from the outer side (from the left side in the drawings) of the pipe main body 10 in the depth direction. As shown in FIG. 1, it is difficult to clearly separate the Zn-Ni alloy plating layer 100 and the pipe main body 10. Further, in the present embodiment, the Fe content is 80.0% or more.

Therefore, in the present embodiment, based on the Fe content profile in the depth direction obtained using GD-OES, a depth at which the Fe content becomes 90.0% in the pipe main body 10 is defined as a "specific depth position". The specific depth position is indicated by a broken line in FIG. 1 and FIG. 2. In the present embodiment, furthermore, the specific depth position is defined as the boundary between the Zn-Ni alloy plating layer 100 and the pipe main body 10. That is, in the present embodiment, the Zn-Ni alloy plating layer 100 is formed in an outer layer (outside of the pipe main body 10) relative to the specific depth position.

On the other hand, impurities such as oil sometimes adhere to the surface of the Zn-Ni alloy plating layer 100. Further, as described later, a chemical conversion treatment layer is formed on the Zn-Ni alloy plating layer 100 in some cases. In a case where impurities or a coating is present on the Zn-Ni alloy plating layer 100 in this way, the Zn content will be unstable in the Zn content profile in the depth direction obtained by GD-OES. Naturally, it is possible for persons skilled in the art to identify the Zn-Ni alloy plating layer 100 from a content profile in the depth direction obtained by GD-OES in this way.

In other words, in the oil-well steel pipe 1 according to the present embodiment, when a region containing C in an amount that is 1.5 times or more greater than the C content of the pipe main body 10 is defined as a C-concentrated layer, of the entire Zn-Ni alloy plating layer 100, in a region in the surface direction of the Zn-Ni alloy plating layer 100 from a specific depth position at which the Fe content of the pipe main body 10 becomes 90.0% until the Zn content exhibits unstable variations that is determined by means of depth profile analysis using GD-OES, the thickness of the C-concentrated layer in the wall thickness direction of the pipe main body 10 is within the range of 0 to 1.50 µm.

In addition, referring to FIG. 1 and FIG. 2, a C content which is 1.5 times greater than the C content of the pipe main body 10 is indicated by a broken line in each drawing. Referring to FIG. 1 and FIG. 2, in the Zn-Ni alloy plating layer 100 (that is, the region on the left side relative to the specific depth position in each drawing) a region at which the C content is equal to or greater than the broken line in the drawing corresponds to a C-concentrated layer. Referring to FIG. 1, in the Zn-Ni alloy plating layer 100 of Test Number 2, it was confirmed that the C-concentrated layer had a certain thickness. On the other hand, referring to FIG. 2, a C-concentrated layer was not observed in the Zn-Ni alloy plating layer 100 of Test Number 3.

As described above, in the present embodiment, a depth profile analysis is carried out by GD-OES using the aforementioned measurement conditions. The depth (µm) from the surface of the Zn-Ni alloy plating layer 100 is plotted on the abscissa, and a content profile in the depth direction for the contents (mass%) of Zn, Fe and C is plotted on the ordinate. The Zn-Ni alloy plating layer 100 is identified from the obtained profile. The thickness (µm) of a C-concentrated layer in the Zn-Ni alloy plating layer 100 can be determined based on the obtained profile and the identified Zn-Ni alloy plating layer 100.

### [Other optional structures of oil-well steel pipe 1 of the present embodiment]

### [Chemical conversion treatment layer]

The oil-well steel pipe 1 of the present embodiment may further include a chemical conversion treatment layer on the Zn-Ni alloy plating layer 100. The chemical conversion treatment layer is not particularly limited, and may be a well-known chemical conversion treatment layer. The chemical conversion treatment layer for example, may be an oxalate chemical conversion treatment layer, may be a phosphate chemical conversion treatment layer, may be a borate chemical conversion treatment layer, or may be a chromate coating. In a case where the chemical conversion treatment layer is a chromate layer, preferably the chromate layer does not contain hexavalent chromium.

In some cases the oil-well steel pipe 1 will be stored outdoors for a long period of time until actually being used at the oil well drilling site. In a case where the oil-well steel pipe 1 is exposed to the atmosphere for a long period of time outdoors, the chemical conversion treatment layer enhances the corrosion resistance of the pin contact surface 400, and can suppress the occurrence of rust (white rust) at the pin contact surface 400. The film thickness of the chemical conversion treatment layer is not particularly limited. The film thickness of the chemical conversion treatment layer is, for example, within the range of 10 to 200 nm.

### [Lubricant coating]

The oil-well steel pipe 1 may further include a lubricant coating on the Zn-Ni alloy plating layer 100, on the chemical conversion treatment layer, or on a contact surface on which the Zn-Ni alloy plating layer 100 is not formed (on the pin contact surface 400 or on the box contact surface 500). The lubricant coating further enhances the lubricity of the oil-well steel pipe 1.

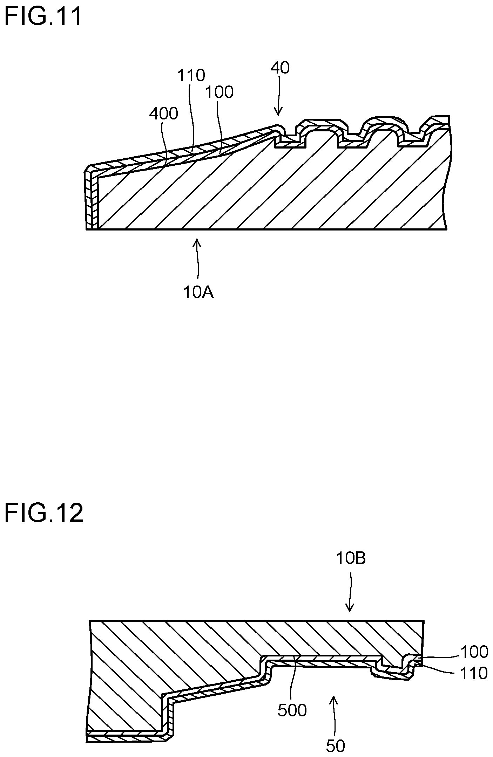

Referring to FIG. 11, in a case where the Zn-Ni alloy plating layer 100 is formed on the pin contact surface 400, the lubricant coating 110 may be formed on the Zn-Ni alloy plating layer 100. Further, referring to FIG. 12, in a case where the Zn-Ni alloy plating layer 100 is formed on the box contact surface 500, the lubricant coating 110 may be formed on the Zn-Ni alloy plating layer 100.

The lubricant coating 110 may be solid, or may be in a semi-solid state or a liquid state. A commercially available lubricant can be used as the lubricant coating 110. The lubricant coating 110 contains, for example, lubricating particles and a binder. As necessary, the lubricant coating 110 may contain a solvent and other components.

The lubricating particles are not particularly limited as long as they are particles having lubricity. The lubricating particles are, for example, one or more types selected from the group consisting of particles of graphite, MoS₂ (molybdenum disulfide), WS₂ (tungsten disulfide), BN (boron nitride), PTFE (polytetrafluoroethylene), CFx (graphite fluoride), and CaCO₃ (calcium carbonate).

The binder, for example, is one or two types selected from the group consisting of an organic binder and an inorganic binder. The organic binder is, for example, one or two types selected from the group consisting of a thermosetting resin and a thermoplastic resin. The thermosetting resin, for example, is one or more types selected from the group consisting of polyethylene resin, polyimide resin and polyamide-imide resin. The inorganic binder, for example, is one or two types selected from the group consisting of compounds containing alkoxysilane and siloxane bonds.

An example of a commercially available lubricant is Seal-Guard ECF (trade name) manufactured by Jet-Lube LLC. Other examples of the lubricant coating 110 include a lubricant coating 110 containing rosin, metallic soap, wax or a lubricant powder.

### [Method for producing oil-well steel pipe 1]

A method for producing the oil-well steel pipe 1 according to the present embodiment is described hereunder. Note that, as long as the oil-well steel pipe 1 of the present embodiment has the structure described above, a method for producing the oil-well steel pipe 1 is not limited to the following production method. However, the production method described hereunder is one favorable example for producing the oil-well steel pipe 1 of the present embodiment.

The method for producing the oil-well steel pipe 1 includes a preparation process (S1) of preparing a hollow shell in which the pin 40 or the box 50 is formed, a preconditioning treatment process (S2), and a Zn-Ni alloy plating layer formation process (S3). In the present embodiment, in the preconditioning treatment process (S2), a degreasing process and a pickling process are performed. As a result, in the oil-well steel pipe 1 according to the present embodiment, a C-concentrated layer in the Zn-Ni alloy plating layer 100 can be made to have a thickness within the range of 0 to 1.50 µm. Hereunder, each process of the method for producing the oil-well steel pipe 1 of the present embodiment is described in detail.

### [Preparation process (S1)]

In the preparation process (S1), a hollow shell in which the pin 40 or the box 50 is formed is prepared. In the present description, the phrase "hollow shell in which the pin or the box is formed" means either of the pipe main body 10 and the pin tube body 11 in a T&C type oil-well steel pipe 1 and the pipe main body 10 in the integral type oil-well steel pipe 1.

The hollow shell in which the pin 40 or the box 50 is formed is produced, for example, by the following method. A starting material is produced using molten steel. Specifically, a cast piece (a slab, bloom or billet) is produced by a continuous casting process using the molten steel. An ingot may also be produced by an ingot-making process using the molten steel. As necessary, the slab, bloom or ingot may be subjected to blooming to produce a billet. The starting material (a slab, bloom or billet) is produced by the above described process. The prepared starting material is subjected to hot working to produce a hollow shell. The hot working method may be piercing-rolling by means of the Mannesmann process, or may be a hot-extrusion process. The hollow shell after hot working is subjected to well-known quenching and well-known tempering to adjust the strength of the hollow shell. A hollow shell is produced by the above process. Note that, in a case where the oil-well steel pipe 1 is the T&C type, a hollow shell for the coupling 12 is also prepared. The method for producing the hollow shell for the coupling 12 is the same as the method for producing the hollow shell that is described above.

In a case where the oil-well steel pipe 1 is the T&C type, threading is performed with respect to the outer surface of both end portions of the hollow shell for the pin tube body 11, to form the pin 40 that includes the pin contact surface 400. By means of the above process, a hollow shell (the pin tube body 11) in which the pin 40 is formed is prepared in a case where the oil-well steel pipe 1 is the T&C type. Note that, in a case where the oil-well steel pipe 1 is the T&C type, the coupling 12 may also be prepared. Specifically, threading is performed with respect to the inner surface of both end portions of the hollow shell for the coupling 12, to form the box 50 that includes the box contact surface 500. The coupling 12 is produced by the above process.

In a case where the oil-well steel pipe 1 is the integral type, threading is performed on the outer surface of the first end portion 10A of the hollow shell to form the pin 40 that includes the pin contact surface 400. In addition, threading is performed with respect to the inner surface of the second end portion 10B of the hollow shell to form the box 50 that includes the box contact surface 500. By means of the above process, in a case where the oil-well steel pipe 1 is the integral type, a hollow shell (pipe main body 10) in which the pin 40 and the box 50 are formed is prepared.

### [Preconditioning treatment process (S2)]

In the preconditioning treatment process (S2), the prepared hollow shell (pipe main body 10) is subjected to a preconditioning treatment prior to forming the Zn-Ni alloy plating layer 100. The preconditioning treatment process (S2) according to the present embodiment includes a degreasing process and a pickling process.

In the preconditioning treatment process (S2) according to the present embodiment, the order in which the degreasing process and the pickling process are performed is not particularly limited. That is, the pickling process may be performed on a hollow shell that was subjected to the degreasing process, or the degreasing process may be performed on a hollow shell that was subjected to the pickling process. Further, the degreasing process and the pickling process may be performed repeatedly in an appropriate manner. That is, in the preconditioning treatment process (S2) according to the present embodiment, a hollow shell that was subjected to the degreasing process and the pickling process may be subjected to the degreasing process once again. Further, in the preconditioning treatment process (S2) according to the present embodiment, a hollow shell that was subjected to the degreasing process and the pickling process may be subjected to a pickling treatment once again. Thus, in the preconditioning treatment process (S2) according to the present embodiment, by appropriately combining and performing a degreasing process and a pickling process, the thickness of a C-concentrated layer in the Zn-Ni alloy plating layer 100 can be adjusted to within the range of 0 to 1.50 µm. Hereunder, the respective processes are described in detail.

### [Degreasing process]

In the preconditioning treatment process (S2) according to the present embodiment, the hollow shell (pipe main body 10) is subjected to a degreasing treatment (degreasing process). Here, the hollow shell that is subjected to a degreasing treatment may be the hollow shell that was prepared in the aforementioned preparation process (S 1), may be a hollow shell that was already subjected to a degreasing treatment in the degreasing process, or may be a hollow shell that was subjected to a pickling treatment in a pickling process to be described later. In the degreasing process according to the present embodiment, electrolytic degreasing is performed as the degreasing treatment, and oil or the like that adhered to the contact surface of the hollow shell is cleaned off. The electrolytic degreasing may be anodic electrolytic degreasing in which the hollow shell serves as an anode, or may be cathodic electrolytic degreasing in which the hollow shell serves as a cathode. Preferably, in the degreasing process according to the present embodiment, anodic electrolytic degreasing is performed as the electrolytic degreasing. In a case where anodic electrolytic degreasing is performed, the effect of degreasing machining oil or the like that is present on the hollow shell surface is high.

A bath (electrolytic degreasing bath) to be used for the electrolytic degreasing is not particularly limited, and a well-known bath can be used. The electrolytic degreasing bath is, for example, an alkaline degreasing bath containing phosphate or silicate. The conditions of the electrolytic degreasing are not particularly limited, and can be appropriately adjusted according to well-known conditions. The conditions of the electrolytic degreasing are, for example, electrolytic degreasing bath temperature: 20 to 70°C, current density: 1 to 100 A/dm², and conduction time: 1 to 10 minutes.

### [Pickling process]

In the preconditioning treatment process (S2) according to the present embodiment, the hollow shell (pipe main body 10) is subjected to a pickling treatment (pickling process). Here, the hollow shell that is subjected to a pickling treatment may be the hollow shell that was prepared in the aforementioned preparation process (S1), may be a hollow shell that was subjected to a degreasing treatment in the aforementioned degreasing process, or may be a hollow shell that was already subjected to a pickling treatment in the pickling process. The pickling treatment performed in the present embodiment may be electrolytic pickling or may be immersion pickling.

In the pickling process according to the present embodiment, in the case of performing electrolytic pickling, cathodic electrolytic pickling in which the hollow shell serves as a cathode may be performed, or anodic electrolytic pickling in which the hollow shell serves as an anode may be performed. In the case of performing electrolytic pickling, preferably cathodic electrolytic pickling is performed. An effect that dissolves the hollow shell is weaker in the case of cathodic electrolytic pickling than in the case of anodic electrolytic pickling. Therefore, it is difficult for impurities originating from C of the hollow shell to form, and it is difficult for a C-concentrated layer to thickly form in the Zn-Ni alloy plating layer 100 of the oil-well steel pipe 1 that is produced. Therefore, in the pickling process of the present embodiment, in the case of performing electrolytic pickling as a pickling treatment, it is preferable to perform cathodic electrolytic pickling.

In the case of performing electrolytic pickling in the pickling process, a bath (electrolytic pickling bath) to be used for the electrolytic pickling is not particularly limited, and a well-known bath can be used. The electrolytic pickling bath, for example, contains 5 to 30% of sulfuric acid. The conditions of the electrolytic pickling are not particularly limited, and can be appropriately adjusted according to well-known conditions. The conditions of the electrolytic pickling are, for example, electrolytic pickling bath temperature: 20 to 60°C, current density: 1 to 100 A/dm², and conduction time: 1 to 60 minutes.

As mentioned above, in the pickling process according to the present embodiment, immersion pickling may be performed. In the case of performing immersion pickling, of the entire hollow shell, a region which it is desired to subject to pickling is immersed in a bath. The bath (immersion pickling bath) to be used for the immersion pickling is not particularly limited, and a well-known bath can be used. Preferably, the immersion pickling bath is hydrochloric acid. When hydrochloric acid is used as the immersion pickling bath, impurities originating from C of the hollow shell are easily removed, and it is difficult for a C-concentrated layer to thickly form in the Zn-Ni alloy plating layer 100 of the oil-well steel pipe 1 that is produced.

Therefore, in the pickling process of the present embodiment, in the case of performing immersion pickling as a pickling treatment, it is preferable to use hydrochloric acid as the immersion pickling bath. Specifically, the immersion pickling bath to be used in the pickling process of the present embodiment contains, for example, 5 to 30% of hydrochloric acid. The conditions of the immersion pickling are not particularly limited, and can be appropriately adjusted according to well-known conditions. The conditions of the immersion pickling are, for example, immersion pickling bath temperature: 0 to 50°C, and immersion time: 0.5 to 10 minutes.

Note that, it is preferable to perform appropriate rinsing in the degreasing process and the pickling process. The rinsing conditions are not particularly limited, and well-known conditions can be used. By appropriately rinsing the hollow shell, deterioration of the electrolytic degreasing bath, the electrolytic pickling bath and the immersion pickling bath can be suppressed.

### [Other optional processes]

The preconditioning treatment process (S2) of the present embodiment may further include at least one of a grinding process and an Ni strike plating process.

In the case of performing a grinding process in the preconditioning treatment process (S2) according to the present embodiment, for example, a sandblasting treatment, and finishing by machine grinding are performed in the grinding process. The sandblasting treatment is a treatment in which a blast material (abrasive) is mixed with compressed air and the mixture is propelled onto the contact surface. Examples of the blast material include spherical shot material and angular grid material. The surface roughness of the contact surface can be increased by the sandblasting treatment. The sandblasting treatment can be carried out by a well-known method. For example, air is compressed by a compressor, and the blast material is mixed with the compressed air. The blast material may be composed of, for example, stainless steel, aluminum, ceramic material, or alumina. The sandblasting treatment conditions such as the propelling speed are not particularly limited, and can be appropriately adjusted according to well-known conditions.

In the Ni strike plating process, an Ni strike plating layer is formed on the surface of the hollow shell. The Ni strike plating layer is an extremely thin undercoat plating layer, and increases the adhesion of the Zn-Ni alloy plating layer 100 that is described later. Note that, the plating bath to be used in the Ni strike plating process is not particularly limited, and a well-known bath can be used. Further, the conditions for forming the Ni strike plating layer are not particularly limited, and can be appropriately adjusted and set.

Note that, in a case where an Ni strike plating process is performed, an Ni strike plating layer is formed between the pipe main body 10 and the Zn-Ni alloy plating layer 100. On the other hand, the thickness of the formed Ni strike plating layer is negligibly thin in comparison to the thickness of the Zn-Ni alloy plating layer 100. In the oil-well steel pipe 1 according to the present embodiment, an Ni strike plating layer may be included in the Zn-Ni alloy plating layer 100.

### [Zn-Ni alloy plating layer formation process (S3)]

In the Zn-Ni alloy plating layer formation process (S3), the Zn-Ni alloy plating layer 100 is formed by electroplating on the pin contact surface 400 of the hollow shell in which the pin 40 is formed and/or on the box contact surface 500 of the hollow shell in which the box 50 is formed, after the preconditioning treatment process (S2).

In the Zn-Ni alloy plating layer formation process (S3), the plating bath is not particularly limited, and a well-known plating bath can be used. For example, a plating bath containing zinc ions: 1 to 100 g/L and nickel ions: 1 to 100 g/L is used as the plating bath. Further, the plating bath may be a chloride bath containing chloride ions, or may be a sulfide bath containing sulfide ions.

In the Zn-Ni alloy plating layer formation process (S3), the Zn-Ni alloy plating layer 100 is formed by electroplating. The electroplating conditions are not particularly limited, and can be appropriately adjusted according to well-known conditions. The electroplating conditions are, for example, a plating bath pH of 1 to 10, a plating bath temperature of 10 to 60°C, a current density of 1 to 100 A/dm², and a treatment time of 0.1 to 30 minutes. In the case of forming the Zn-Ni alloy plating layer 100 on the pin contact surface 400, the pin contact surface 400 is immersed in the aforementioned plating bath and electroplating is performed. On the other hand, in the case of forming the Zn-Ni alloy plating layer 100 on the box contact surface 500, the box contact surface 500 is immersed in the aforementioned plating bath and electroplating is performed.

The oil-well steel pipe 1 of the present embodiment having the structure described above is produced by the production processes that are described above.

### [Other optional processes]

In the method for producing the oil-well steel pipe 1 according to the present embodiment, at least one process among the following chemical conversion treatment process and film formation process may also be performed. These processes are optional processes. Accordingly, these processes need not be performed.

### [Chemical conversion treatment process]

In the production method of the present embodiment, as necessary, a chemical conversion treatment process may be performed. That is, the chemical conversion treatment process is an optional process. In the case of performing a chemical conversion treatment process, the chemical conversion treatment layer is formed on the Zn-Ni alloy plating layer 100. In the chemical conversion treatment process, it suffices to perform a well-known chemical conversion treatment. The chemical conversion treatment, for example, may be an oxalate chemical conversion treatment, may be a phosphate chemical conversion treatment, or may be a borate chemical conversion treatment. For example, in the case of performing a phosphate chemical conversion treatment, a chemical conversion treatment that uses zinc phosphate may be performed, a chemical conversion treatment that uses manganese phosphate may be performed, or a chemical conversion treatment that uses calcium zinc phosphate may be performed.

Specifically, in the case of performing a zinc phosphate chemical conversion treatment, as a treatment solution, for example, a chemical conversion treatment solution containing 1 to 150 g/L of phosphate ions, 3 to 70 g/L of zinc ions, 1 to 100 g/L of nitrate ions, and 0 to 30 g/L of nickel ions can be used. In this case, the temperature of the chemical conversion treatment solution is for example, 20 to 100°C. The chemical conversion treatment layer can be formed by appropriately setting well-known conditions and performing a chemical conversion treatment in this way.

### [Film formation process]

As necessary, the production method of the present embodiment may include performance of a film formation process. In other words, the film formation process is an optional process. In the film formation process, a lubricant coating 110 is formed on the Zn-Ni alloy plating layer 100 and/or on a contact surface (pin contact surface 400 or box contact surface 500) on which the Zn-Ni alloy plating layer 100 is not formed.

In the film formation process, a lubricant or a composition containing the components of the aforementioned lubricant coating 110 is applied. By this means a lubricant coating 110 is formed. The application method is not particularly limited. Examples of the application method include spray coating, brushing, and immersion. When adopting spray coating as the application method, the composition or lubricant may be heated and then sprayed in a state in which the flowability has been increased. The composition or lubricant is then dried to form a lubricant coating 110.

The advantageous effects of the oil-well steel pipe 1 of the present embodiment are described more specifically hereunder by way of examples. The conditions adopted in the following examples are one example of conditions which are employed for confirming the workability and advantageous effects of the oil-well steel pipe 1 of the present embodiment. Accordingly, the oil-well steel pipe 1 of the present embodiment is not limited to this one example of the conditions.

### EXAMPLES

In the present examples, after performing various preparations with respect to the contact surface of a pipe main body (hollow shell), a Zn-Ni alloy plating layer was formed thereon. Specifically, an oil-well steel pipe with the trade name "VAM21" was used in which the pipe main body had an external diameter of 244.48 mm and a wall thickness of 13.84 mm. Further, the pipe main body of the oil-well steel pipe that was used was composed of low alloy steel. Specifically, the pipe main body of the oil-well steel pipe used in the present examples had a chemical composition consisting of, in mass%, C: 0.24 to 0.31%, Si: 1.0% or less, Mn: 1.0% or less, P: 0.02% or less, S: 0.01% or less and Cr: 0.40 to 0.70%.

The hollow shell of Test Number 9 was subjected to sandblasting as grinding work. Note that, the hollow shells of the respective test numbers other than Test Number 9 were not subjected to grinding work. Next, the hollow shells of the respective test numbers were subjected to electrolytic degreasing as a degreasing process. Cathodic electrolytic degreasing or anodic electrolytic degreasing was performed as the electrolytic degreasing. The electrolytic degreasing treatment performed on the hollow shells of the respective test numbers is shown in Table 1. Specifically, in Table 1, the term "Cathodic" in the "Electrolytic Degreasing" column means that cathodic electrolytic degreasing was performed. In Table 1, the term "Anodic" in the "Electrolytic Degreasing" column means that anodic electrolytic degreasing was performed. In the electrolytic degreasing, a commercially available electrolytic degreasing cleaner was used as the electrolytic degreasing bath. Further, the aforementioned preferable conditions were adopted as other conditions of the electrolytic degreasing.

### [Table 1]

**Table 1**

| Test Number | Electrolytic Degreasing | Electrolytic Pickling | Immersion Pickling |
|---|---|---|---|
| 1 | Cathodic | Anodic | HCl |
| 2 | Cathodic | Anodic | HCl |
| 3 | Cathodic | Cathodic | HCl |
| 4 | Cathodic | Anodic | H₂SO₄ |
| 5 | Anodic | Cathodic | HCl |
| 6 | Anodic | Cathodic | HCl |
| 7 | Anodic | Anodic | HCl |
| 8 | Anodic | Cathodic | HCl |
| 9 | Anodic | Cathodic | HCl |

The hollow shell of each test number that was subjected to the electrolytic degreasing was rinsed. The rinsed hollow shell of each test number was then subjected to electrolytic pickling as a pickling process. Cathodic electrolytic pickling or anodic electrolytic pickling was performed as the electrolytic pickling. The electrolytic pickling treatment that was performed on the hollow shell of each test number is shown in Table 1. Specifically, in Table 1, the term "Cathodic" in the "Electrolytic Pickling" column means that cathodic electrolytic pickling was performed. In Table 1, the term "Anodic" in the "Electrolytic Pickling" column means that anodic electrolytic pickling was performed. The aforementioned preferable conditions were adopted as other conditions of the electrolytic pickling.

The hollow shell of each test number on which electrolytic pickling was performed was rinsed. The rinsed hollow shell of each test number was then subjected to a second electrolytic degreasing under the same conditions as the aforementioned conditions again as a degreasing process. That is, in a case where cathodic electrolytic degreasing was performed in the first electrolytic degreasing treatment, cathodic electrolytic degreasing was also performed in the second electrolytic degreasing treatment. Likewise, in a case where anodic electrolytic degreasing was performed in the first electrolytic degreasing treatment, anodic electrolytic degreasing was also performed in the second electrolytic degreasing treatment. Further, the aforementioned preferable conditions were adopted as other conditions of the electrolytic degreasing treatment.

The hollow shell of each test number that was subjected to the second electrolytic degreasing was rinsed. The rinsed hollow shell of each test number was then subjected to immersion pickling as a pickling process. The immersion pickling baths used for the hollow shells of the respective test numbers are shown in Table 1. Specifically, in Table 1, the term "HCl" in the "Immersion Pickling" column means that an aqueous hydrochloric acid solution was used as the immersion pickling bath. In Table 1, the term "H₂SO₄" in the "Immersion Pickling" column means that an aqueous sulfuric acid solution was used as the immersion pickling bath. The aforementioned preferable conditions were adopted as other conditions of the immersion pickling.

Among the hollow shells after the immersion pickling, the hollow shell of each test number excluding Test Number 4 was subjected to an Ni strike plating process to form an Ni strike plating layer thereon. On the other hand, an Ni strike plating layer was not formed on the hollow shell of Test Number 4. Note that, the aforementioned preferable conditions were adopted as the conditions of the Ni strike plating process.

The hollow shell after the immersion pickling or the hollow shell after the Ni strike plating process was subjected to a Zn-Ni alloy plating layer formation process. A well-known plating bath that is commercially available was used as the plating bath. The aforementioned preferable conditions were adopted as other conditions of the Zn-Ni alloy plating layer formation process. Note that, the thickness of the Zn-Ni alloy plating layer was within the range of 5 to 25 µm. An oil-well steel pipe of each test number was produced by the above production process.

Each oil-well steel pipe that was produced was subjected to a depth profile analysis by GD-OES and a galling resistance test.

### [Depth profile analysis by GD-OES]

A depth profile analysis was carried out by GD-OES with respect to the oil-well steel pipe of each test number. Specifically, an elemental analysis in the depth direction was carried out using GD-OES with respect to the depth direction from the surface of the Zn-Ni alloy plating layer of the oil-well steel pipe of each test number. Based on the obtained results, content profiles in the depth direction as illustrated in FIG. 1 and FIG. 2 were created. Note that, the Zn-Ni alloy plating layer was identified by the method described above.

The C content in the oil-well steel pipe of each test number is shown as "C Concentration in Steel (mass%)" in Table 2. In addition, a value that is 1.5 times the value of the C content is shown as "C Concentration Reference (mass%)" in Table 2. The thickness of a C-concentrated layer in the identified Zn-Ni alloy plating layer was determined based on the content profile in the depth direction of each test number that was obtained by the aforementioned method, and the C content (0.42 mass% or more) of the C-concentrated layer. The determined thickness of the C-concentrated layer in the oil-well steel pipe of each test number is shown as "C-Concentrated Layer (µm)" in Table 2.

### [Table 2]

**Table 2**

| Test Number | C Concentration in Steel (mass%) | C Concentration Reference (mass%) | C-Concentrated Layer (µm) | Galling Resistance (times) |
|---|---|---|---|---|
| 1 | 0.27 | 0.41 | 3.05 | 5 |
| 2 | 0.28 | 0.42 | 2.54 | 5 |
| 3 | 0.31 | 0.46 | 0.00 | 10 |
| 4 | 0.27 | 0.40 | 2.84 | 5 |
| 5 | 0.24 | 0.36 | 0.00 | 9 |
| 6 | 0.26 | 0.39 | 0.00 | 8 |
| 7 | 0.24 | 0.36 | 0.00 | 10 |
| 8 | 0.25 | 0.38 | 0.00 | 10 |
| 9 | 0.28 | 0.43 | 0.00 | 10 |

### [Galling resistance test]

A galling resistance test was conducted on the oil-well steel pipe of each test number. The galling resistance test was conducted by performing repeated fastening in a manner that assumed sliding over a long distance. Specifically, fastening and loosening were repeated at room temperature (approximately 25°C) using the oil-well steel pipe of each test number. The fastening torque was set to 62940 N·m. Each time one cycle of fastening and loosening was completed, the pin contact surface and box contact surface were visually observed. The state of occurrence of galling on the contact surfaces (pin contact surface and box contact surface) was examined by visual inspection.

The test was ended when galling occurred on a sealing surface (pin sealing surface or box sealing surface) of the contact surfaces. When the galling on an external thread part was minor and was repairable by repairing by filing or the like, the galling flaws were corrected and the test was continued. The maximum number of times for repeating fastening was set as 10 times. The largest number of times of fastening was performed without either unrepairable galling occurring at a thread part or galling occurring at a sealing surface was adopted as the evaluation index for galling resistance. The result of the galling resistance test for the oil-well steel pipe of each test number is shown in the "Galling Resistance (times)" column in Table 2.

### [Evaluation results]

Referring to Table 2, in the oil-well steel pipe of each of Test Numbers 3 and 5 to 9, in the Zn-Ni alloy plating layer, the thickness of the C-concentrated layer was within the range of 0 to 1.50 µm. Consequently, the result in the galling resistance test was 6 times or more. That is, the oil-well steel pipe of each of Test Numbers 3 and 5 to 9 had excellent galling resistance.

On the other hand, in the oil-well steel pipe of each of Test Numbers 1, 2 and 4, in the Zn-Ni alloy plating layer, the thickness of the C-concentrated layer was more than 1.50 µm. Consequently, the result in the galling resistance test was 5 times or less. That is, the oil-well steel pipe of each of Test Numbers 1, 2, and 4 did not have excellent galling resistance.

An embodiment of the present disclosure has been described above. However, the foregoing embodiment is merely an example for implementing the present disclosure. Accordingly, the present disclosure is not limited to the above embodiment, and the above embodiment can be appropriately modified within a range which does not deviate from the gist of the present disclosure.

### REFERENCE SIGNS LIST

- 1: Oil-well steel pipe
- 10: Pipe Main Body
- 10A: First End Portion
- 10B: Second End Portion
- 40: Pin
- 41: External Thread Part
- 50: Box
- 51: Internal Thread part
- 100: Zn-Ni alloy Plating Layer
- 110: Lubricant Coating
- 400: Pin Contact Surface
- 500: Box Contact Surface

## Claims

1. An oil-well steel pipe, comprising:
a pipe main body including a first end portion and a second end portion;
a chemical composition of the pipe main body containing, in mass%:
C: 0.01 to 0.60%,
Cr: 0 to 8.0%, and
Fe: 80.0% or more;
wherein
the pipe main body includes:
a pin formed at the first end portion, and
a box formed at the second end portion;
the pin includes:
a pin contact surface including an external thread part; and
the box includes:
a box contact surface including an internal thread part;
the oil-well steel pipe further comprising:
a Zn-Ni alloy plating layer formed on at least one of the pin contact surface and the box contact surface,
wherein
when a region containing C in an amount that, in mass%, is 1.5 times or more greater than a C content of the pipe main body is defined as a C-concentrated layer,
in the Zn-Ni alloy plating layer, a thickness of the C-concentrated layer in a wall thickness direction of the pipe main body is within a range of 0 to 1.50 µm.

2. The oil-well steel pipe according to claim 1, wherein
a thickness of the Zn-Ni alloy plating layer is within a range of 5 to 25 µm.

3. The oil-well steel pipe according to claim 1 or claim 2, comprising:
a lubricant coating on or above the Zn-Ni alloy plating layer.
